# EUROPEAN PATENT SPECIFICATION

(11) **EP 3 648 945 B1**
(45) Date of publication and mention of the grant of the patent: **16.03.2022**
(21) Application number: 18742924.6
(22) Date of filing: 06.07.2018
(51) Int. Cl.: B29C 45/56, E04D 13/035, E06B 3/20, E06B 3/30, B29L 31/10, B29K 105/16, B29K 105/12, B29K 105/20, B29K 311/10, B29C 45/33, B29K 309/08, B29K 207/00, B29K 105/06, B29K 311/14

(54) **METHOD OF MANUFACTURING A COMPONENT OF A ROOF WINDOW FRAME OR SASH**
VERFAHREN ZUR HERSTELLUNG EINES BAUTEILS EINES DACHFENSTERRAHMENS ODER -FLÜGELS
PROCÉDÉ DE FABRICATION D'UN ÉLÉMENT D'UN CADRE OU D'UN VANTAIL DE FENÊTRE DE TOIT

(30) Priority: 07.07.2017 DK PA201770559; 07.07.2017 DK PA201770560
(43) Date of publication of application: 13.05.2020
(73) Proprietor: VKR Holding A/S, 2970 Hørsholm (DK)
(72) Inventor: RASMUSSEN, Allan, 2970 Hørsholm (DK)
(74) Representative: AWA Denmark A/S
(86) International application number: PCT/DK2018/050181
(87) International publication number: WO 2019/007472

(56) References cited:
- EP-A1- 0 586 213
- EP-A2- 2 857 172
- EP-B1- 0 586 213
- EP-B1- 2 857 172
- US-A1- 2002 034 629
- GOTTFRIED STEINER ET AL: "Exjection: Dem Spritzgie?en um L?ngen voraus", KUNSTSTOFFE, vol. 2008, no. 4, 30 April 2008 (2008-04-30), pages 51-55, XP055189095, M?nchen

## Description

### Technical Field

The present invention relates to a method of manufacturing a component of a roof window frame or sash.

### Background Art

Conventional window frames, especially roof window frames, are typi-cally made from profiles with a wooden core, often using plywood, and a polyurethane (PUR) shell. Window frames such as these are conventionally made using a moulding process. The wooden core is inserted into a mould and fluid polyurethane flows around it before setting into the desired shape. The polyurethane can be polymerised in situ i.e. the corresponding monomers can be introduced into the mould and exposed to conditions in which they will polymerise.

Whilst these window frames provide acceptable properties in terms of weather resistance including water drainage, insulation, strength, cost, ease of fabrication and recyclability, it would be desirable to provide an alternative manufacturing method which results in window frames in which some or all of these characteristics are improved.

In recent years, a new process of shaping plastic materials has emerged. The process is known as Exjection^{®} and is particularly suitable for the formation of elongate members. It combines the principles of injection moulding and extrusion. The process has been described in a number of patent applications including US2008/0251963, US2009/304843 and US2010/221500.

US2008/0251963 discloses a method of Exjection^{®} that is suitable for the production of profiled and at least partially elongated components out of liquid or viscous solidifying moulding compounds. According to the disclosed method, a moulding compound is injected into a mould cavity and transported away under steady extension of the mould cavity and under steady elongation of the component to be formed after the initial filling of the mould cavity. The moulding compound can be transported out of the mould while the moulding compound is continuously being injected until the forming component reaches its final length.

It is disclosed that the mould has at least one mould insert whose surface is part of the peripheral surface of the mould cavity. The insert is supported in the mould in a movable way in a longitudinal direction of the component to be formed so that the mould cavity forming the component can be expanded to the desired size and shape of the component inside and outside of the mould by a movement of the mould insert.

The method is disclosed as being applicable for products with elongated geometries. Example products are given including sports and leisure equipment such as ski components, office supplies such as rulers and tool components such as handles.

Variations of the Exjection^{®} process are disclosed in US2009/304843 and US2010/221500.

US2009/304843 discloses an injection moulding installation with a fixed and a moveable machine clamping plate, and at least one injection unit. There is an injection-moulding device which is located between the machine clamping plates for producing profiled parts, elongated at least in sections, by means of closure-side components which are assigned to the one machine clamping plate. There are nozzle-side components which are assigned to the other machine clamping plate. There is also a slide module which is located between these components and which has a slide which is arranged in a moveable manner on a closure-side or nozzle-side component. The slide contributes to form the mould cavity. There is also a drive module for controlling the movement of the moveable part(s) of the slide module. The part is produced in the intended dimension and shape inside and outside the mould via the movement of the slide. An at least partial functional integration of at least the closure-side components, and/or the drive module, and or the slide module in one or more components in the installation is disclosed.

US2010/221500 discloses a method for the production of elongated profiles or ledges out of solidifying compounds in a mould. The moulding compound is continuously injected into the mould cavity, with the injected moulding compound being transported away from gating point(s) and out of the mould under steady extension of the mould cavity and under steady elongation of the forming profile or ledge by relative movement of mould components. The moulding compound is injected until the profile or ledge reaches its desired length.

EP2857172 A2 discloses a method and a device for producing an extruded profile from fibers of renewable raw materials, the fibers being mixed with additives in a processing unit to form a pasty fiber fluid. In a first phase for producing a segmented core for the profile the method includes: moving a piston, which is displaceable in a first compression mold, into a first, retracted position, pressing fiber fluid into the first compression mold as a fiber segment, retracting the piston contrary to the extrusion direction from the first to a second, more retracted position, filling the space remaining in the first compression mold between the fiber segment and the piston with filler as a filler segment and allowing the filler segment to harden. In a second phase for producing a jacket around the core: advancing the piston in the extrusion direction from the second to a third position while advancing the produced core into a second compression mold, a circumferential gap remaining around the core, and further fiber fluids being pressed into the circumferential gap as a jacket.

Reference is also made to Gottfried Steiner et al.: "Exjection: Dem Spritzgiessen um Langen voraus", Kunstsoffe, vol. 2008, no. 4, 30 April 2008 (2008-04-30), pages 51-55, XP055189095 which discloses an Exjection^{®} method.

### Summary of Invention

It is an object of the present invention to provide a method incorporating an Exjection^{®} process that is better suited to making components of a roof window frame or sash.

It is a further object of the present invention to provide a method of manufacturing a component of a roof window frame or sash in which one or more of the characteristics of the corresponding roof window into which the component is incorporated is improved compared with conventional roof windows.

Thus, according to a first aspect of the present invention, there is provided a method of manufacturing a component of a roof window frame or sash, the method comprising the steps of:
- providing a thermoplastic with a melting temperature in the range of 100 - 300°C;
- providing a mould comprising a cavity, the cavity being defined by a plurality of boundary members, the volume of the cavity being adjustable;
- heating the thermoplastic to a temperature at which it melts;
- introducing the liquid thermoplastic into the mould cavity via an inlet;
- increasing the volume of the mould cavity by moving at least one of the boundary members and providing relative motion between the inlet and the mould cavity whilst introducing further liquid thermoplastic such that the liquid thermoplastic conforms to the expanded volume of the cavity;
- allowing the thermoplastic to harden so that it can maintain its shape without requiring support from the mould and releasing the hardened thermoplastic from mould;
   wherein the thermoplastic contains filler in an amount of 10 - 70 % by weight
   and further wherein a mould insert is provided in the mould cavity, preferably before the liquid thermoplastic is introduced, the liquid thermoplastic being moulded around the mould insert, the mould insert being removed from the cavity after the thermoplastic surrounding the mould has hardened such that it can maintain its shape without requiring support from the mould insert, the removal of the insert forming a hollow region in the component of the roof window frame or sash.

It has surprisingly been found that the Exjection^{®} process can be used to make components of roof window frames or sashes provided that modifications are made to the process in order to give a product with desirable characteristics such as weather resistance including water drainage, insulation properties and strength characteristics.

Use of a thermoplastic containing filler in an amount of 10 - 70 % contributes to the strength. The presence of the filler makes the material stronger than if the thermoplastic were used in the absence of filler. It has been found that this range provides sufficient strength for structural window requirements. This is particularly relevant for longer window dimensions, where it can otherwise be difficult to prevent warping and ensure the window has dimensional stability. Further, it has been found that the expanding mould provides better dispersion of filler with random orientation compared with conventional systems and therefore results in superior window components.

It has been found that polymers suitable for window environments have a melting temperature in the claimed range, and especially in the range of 150-300°C. Such polymers have good workability/process conditions in the expanding mould, and the heated material sets gradually allowing fast cycles of elongated items.

In contrast with extrusion processes which are limited to forming profiles of constant cross section, the method of the present invention enables profiles to be produced in which the cross section varies over the length. Thus, features such as strengthening ribs can be added. Further, unlike extrusion, the profiles produced according to the present invention can have high multi-directional strength, better enabling them to handle the forces encountered by roof windows.

The ability to move one or more boundary members to change the volume of the mould cavity means that the same apparatus can be used to produce a variety of different profiles in an efficient and cost-effective manner. In particular, the same mould can be used to form elements of varying length by simply halting the extension of the mould cavity at the appropriate time. This obviates the need for multiple moulds to create different length components.

The component may be a core member adapted to form part of a top frame member, bottom frame member, side frame member, top sash member, bottom sash member or side sash member, or combination thereof. The method enables core members to be formed with a geometry which gives the core member a strength that is at least comparable to an equivalent solid wooden core used conventionally. However, a core member formed according to the present invention is beneficial since unlike wood, the plastic has a high degree of uniformity. Further, the properties can easily be modified, for example by control of the amount and/or nature of the filler material and/or by control of the structure of the core member.

The component may be a top frame member, bottom frame member, side frame member, top sash member, bottom sash member or side sash member, or combination thereof. Manufacturing these components by the method of the present invention enables structures to be produced that differ from those conventionally used, but which exhibit improved strength and/or insulation characteristics.

In all claimed embodiments, a mould insert is provided in the mould cavity, the liquid thermoplastic being moulded around the mould insert, the mould insert being removed from the cavity after the thermoplastic surrounding the mould has hardened such that it can maintain its shape without requiring support from the mould insert, the removal of the insert forming a hollow region in the component of the roof window frame or sash.

Preferably, the mould insert is provided in the mould cavity before introduction of the liquid thermoplastic commences. This is generally simpler than introducing the insert once there is liquid thermoplastic present in the mould cavity.

There are numerous advantages that span from producing a hollow region. Firstly, the amount of thermoplastic material needed to make the product is reduced, thereby reducing the production cost of the product. Secondly, the hollow region can be filled, partially or entirely, with further materials to modify the properties of the component.

In some embodiments, the method of the present invention comprises the step of providing the hollow region with insulation after it has been formed. It will be understood that any suitable insulation material may be used. Particularly suitable insulating materials include those selected from the group consisting of expanded polypropylene, expanded polystyrene, polyurethane, expanded polyester, expanded poly-lactic acid, mineral wool, natural fibres, aerogel, and mixtures thereof. Alternatively, or in combination with one or more of these, air or a vacuum may be used to give further insulating properties.

Optionally, an insulating body may be provided in the mould cavity before the liquid thermoplastic is introduced, the insulating body being in-moulded into the thermoplastic to become part of the component. This way, the insulation means can be incorporated into the component during the moulding process without additional steps being required to introduce insulating components once the component has been moulded. The manufacturing process can therefore be simplified.

It will be understood that any suitable insulation that can withstand the moulding process can be used. Polypropylene and/polystyrene are particularly suitable. These can be heated and/or treated with steam or carbon dioxide in order to form an expanded state. This can be done either before the material is placed into the mould, or once the material is in place in the mould but before the liquid thermoplastic is introduced.

Insulating material may additionally or alternatively be dispersed in the thermoplastic before it is introduced into the mould or after it has been introduced, but before it has hardened.

In some embodiments, at least one item of hardware is provided in the mould cavity before or during the introduction of the liquid thermoplastic, the item of hardware being in-moulded into the component of a roof window frame or sash, the at least one item of hardware being selected from the group consisting of hinges, locks, brackets, electrical conductors, corner keys, fastener fittings, and glazing clips. By in-moulding one or more items of hardware, the manufacturing process can be simplified as the hardware item(s) can be affixed during the moulding process rather than requiring additional steps in which these are added to the component.

The mould cavity may be provided with at least one reinforcement member, the reinforcement member being in-moulded into the thermoplastic to become part of the component. By in-moulding at least one reinforcement member, additional strength can easily be provided in regions where it is required. Whilst it will be understood that this will be applicable for a variety of different components, it is especially beneficial for side members of the frame and sash where additional reinforcement can be provided in the region of the hinge. It is also particularly relevant for top and/or bottom members in the region where the lock is to be located.

Where at least one item of hardware is in-moulded, at least one reinforcement member may be positioned adjacent at least one item of hardware to provide reinforcement to the component in the region surrounding the item of hardware. In such cases, the reinforcement member may be made from metal or any other suitable material.

The method may further comprise the step of forming at least one connection element in the component. This may be achieved in any suitable way. For example, it may be achieved by using a mould insert to provide the desired shape or may be achieved by a cutting technique applied once the thermoplastic has hardened in order to give the desired shape.

The connection element may be adapted for connection of the component with an item selected from the group consisting of cladding, brackets, locks, handles, hinges, glazing and corner keys. Thus, it may take the form of a screw barrel into which a screw from one of the aforementioned components can be affixed. Alternatively, the connection element may take the form of a clip or bracket or other component which overlaps with at least a part of one of the aforementioned components.

Forming an integral connection element in this way is beneficial as it reduces the number of additional components required which in turn reduces assembly time and cost.

Optionally, at least one of the mould cavity boundary members has one or more depressions or protrusions on its surface so that one or more protrusions, depressions, ribs, ridges, meshes, fins, connectors elements, vent ducts or other surface structures are formed on the surface of the component. Any suitable surface structure may be used. Mesh-type structures, or other structures having ribs or protrusions which optionally overlap and/or intersect are favourable as they provide additional rigidity. The boundary wall(s) used to form the surface structures will be selected based on, inter alia, what type of component is being made and where it is appropriate to have the corresponding reinforcing surface structure. It will be understood that in some embodiments it is advantageous for the surface structure to be located so that it can provide reinforcement near to elements such as locks, hinges and/or brackets.

As an additional or alternative means of providing rigidity, one or more mould inserts may be used to provide the component with a honeycomb structure or cellular structure formed from a plurality of ribs and/or flanges. Optionally the ribs/flanges overlap and/or interconnect to provide increased rigidity in multiple directions. This can be particularly beneficial when the component is a core member as the rigidity enables the core member to add strength and rigidity to the corresponding roof window into which the core member is to be incorporated.

The method may further comprise the step of at least partly encapsulating the component with plastic. The plastic is optionally polyurethane. Whilst this may be used with any component, it is particularly useful for core members. In such circumstances, the core member may provide the majority of the strength and the encapsulation provides the desired outer shape characteristics and surface properties.

In some embodiments, the method further comprises the step of at least partially covering the component with an outer layer. Where the component is encapsulated, the outer layer will be added over the encapsulation. The use of an outer layer means that the properties of different parts can readily be tailored. The outer layer can give the outer surface different properties from the body of the component. The outer layer may be made from any suitable material. It will be understood that suitable materials include: polypropylene, acryl-nitrile-styrene-acrylate, styrene-acryl-nitrile, polycarbonate, polyethylene, polybutylene-terephthalate, other plastics, aluminium, other metals, rubber, natural fibres and combinations thereof.

The use of an outer layer can also improve the recyclability of the formed product. The process of the present invention allows the corresponding roof window to be made only with components that are relatively easy to recycle. If further components are required which would be more difficult to recycle, they can be incorporated into the outer layer. This way, at the end of the lifespan of the product, the outer layer can be removed for further processing whilst the remainder of the roof window can be readily recycled.

Optionally, the encapsulating plastic or the outer layer comprises a UV resistant component, and/or a flame resistant component. These components are generally expensive and so it is desirable to use these only where required. It will be appreciated that it is the outer surface of a window frame which is exposed to UV radiation from sunlight, in use, and would be the first to come into contact with flames in the event of a fire. Thus, by including an outer layer, these components can be provided only where necessary i.e. on the surface. This reduces cost and simplifies the manufacturing process.

In some embodiments, the thermoplastic is polypropylene, polyvinylchloride, chlorinated polyvinylchloride, high density polyethylene, polyethylene terephthalate, acrylonitrile butadiene styrene or polycarbonate. It has surprisingly been found that polypropylene provides excellent properties both in terms of the ease with which it can be moulded and the characteristics of the component formed when polypropylene is used in the manufacturing process. The other materials also provide favourable characteristics.

The filler may be present in the form of fibres. The fibres act as reinforcing fibres and the process of the present invention allows many of the fibres to orient randomly thereby giving multi-directional strength. In contrast, it will be understood that fibres that have a high degree of alignment do not generally provide high multi-directional strength.

The fibres may be present in an amount of from 10 - 50% by weight, preferably 20 - 40% by weight or 30 - 40% by weight. These ranges provide a balance between strength characteristics and cost.

Whilst it will be understood that any suitable fibre may be used, in some embodiments the fibres are glass fibres or are made from natural fibres, preferably cellulose. Glass fibres provide a high degree of strength. Natural fibres may not be as strong as mineral fibres such as glass fibres, but the method of the present invention results in a component which has sufficient strength characteristics even when natural fibres are used. The use of natural fibres such as cellulose provides favourable properties from an environmental perspective. The environmental impact of these fibres during production and at the end of the product's life is significantly reduced compared with non-natural fibres. Further, cellulose fibres are readily available from the unused wood left-over in the production on conventional wood-based windows.

In some embodiments, the component has a substantially flat surface. It will be understood that substantially flat means that whilst surface imperfections may be present, the surface has no ledges, ridges or similar macroscopic perturbations. The substantially flat surface may define a plane into which glass is positioned, or may define a plane intended to face the interior of a building when the window is in use.

The components formed may be connectable with other components, optionally via joining members. The components formed may be any suitable shape including linear, L-shaped, C-shaped, square or rectangular. Preferably, where square or rectangular, they are connectable with other square or rectangular elements.

Examples of connection means are outlined in Table 3. For example, two-half shells may be connected together by snap locking, by having complimentary shapes that ensure a tight fit, e.g. a tongue and groove type structures and/or by using additional means such as adhesive or welding. Additional fasteners could also be used.

For the connection of core members, any suitable means may be used. It may be particularly favourable for a projection in one element to fit into an opening in another element. This in itself may create a tight fit, or could be further enhanced by snap locks, adhesive, welding and/or fasteners. Corner connectors may optionally be used.

The at least one reinforcement member may be made from a material chosen from the group consisting of steel, aluminium, pultruded profile, wood, natural fibres, carbon fibres, glass fibre tape, plastic and combinations thereof. These materials provide suitable strength characteristics.

Optionally, the reinforcement member has a shape selected from the group consisting of mats, sheets, plates, bars, rods, wedges, blocks and tubes. Steel sheets and wooden blocks are particularly preferable.

In some embodiments, at least one pane of glass and/or another component of a roof window frame or sash is positioned at least partially within the mould cavity during formation of the component. It has surprisingly been found that components such as side sash members can be manufactured even in the presence of fragile components, such as panes of glass, since the forces involved during formation are generally low enough to be tolerated by the fragile components.

Another component can be used to influence the shape of the forming component. This can be particularly relevant where the component to be formed is to be connected to a component formed from a different material or that has been treated to withstand the conditions in the mould. Introducing another component during the moulding process can streamline the manufacturing process as it obviates the need to shape the component at a later stage and/or connect the components at a later stage.

In some embodiments of the method, the inlet moves relative to the mould cavity and the movement occurs in more than one dimension. Preferably, the inlet moves in two dimensions. In this way, components can be formed that have curves, bends and/or corners.

In some embodiments, part of the component is released from the mould whilst another part is forming in the mould. This is advantageous as it enables components to be formed which are larger than the mould cavity. This means that a single mould cavity can be used for different sizes of component. It also enables a cavity to be used that is smaller than the component to be formed, thereby reducing the machinery costs.

Disclosed herein is a method of manufacturing a roof window frame or sash, the method comprising the steps of:
i) connecting two or more components of a roof window frame or sash, wherein at least one component is formed by a method according to the present invention, wherein each component is a core member adapted to form part of a top frame member, bottom frame member, side frame member, top sash member, bottom sash member or side sash member, or combinations thereof, the components being connected by gluing, laser welding, ultrasonic welding, heat welding, snap-fitting, screwing together and/or connecting with brackets, the connected components forming a core framework; and
ii) at least partially encapsulating the core framework by moulding a plastic around it, the plastic optionally being polyurethane.

The method allows a strong thermoplastic core to be formed which is then encapsulated by a second material to give the desired shape. Thus, the roof window can have the appearance of a conventional window, but with improved characteristics such as lower weight or increased strength.

Also disclosed herein is a method of manufacturing a roof window frame or sash, the method comprising the steps of connecting two or more components of a roof window frame or sash, at least one of the components being formed by a method according to the present invention, wherein each component is selected from a top frame member, bottom frame member, side frame member, top sash member, bottom sash member or side sash member, or combination thereof, the components being connected by gluing, laser welding, ultrasonic welding, heat welding, snap-fitting, screwing together and/or connecting with brackets.

This method enables easily fabrication of the components which can then subsequently be assembled to form a frame or sash.

Thus, roof window frame and sashes can be manufactured from materials that were previously considered too costly, too weak difficult to manipulate, or simply inappropriate, to use in the production of roof windows. The resulting roof windows have favourable characteristics, whilst offering environmental advantages both during production and later recycle.

Disclosed herein but not claimed is a component of a roof window frame or sash, wherein the component is a core member comprising a shell defining an outer surface of the core member, the shell delimiting at least one closed cell, the core member further comprising a plurality of strengthening ribs and/or flanges extending from the shell, wherein the core member comprises a thermoplastic with a melting temperature in the range of 100 - 300°C, and the thermoplastic comprises filler in an amount of 10 - 70 %.

The core member provides an attractive alternative to wood. In particular, unlike wood it has uniform characteristics that can readily be tailored. Further, the core can be as strong as, if not stronger than wood.

Also disclosed herein but not claimed is a frame adapted for use as a sash or a stationary frame for a roof window, said frame including a top frame member, a bottom frame member, and two side fame members, these frame members defining a frame plane and each of these frame members having a longitudinal direction extending in the frame plane, said frame comprising a core member and a moulded surface layer covering the core member wholly or partially and giving the frame desired surface properties, wherein the core member comprises a shell defining an outer surface of the core member and delimiting at least one closed cell, the core member further comprising a plurality of strengthening ribs and/or flanges extending from the shell, the core member comprising a thermoplastic with a melting temperature in the range of 100 - 300°C, and the thermoplastic comprising filler in an amount of 10 - 70 %.

Such a frame is particularly beneficial as it has the appearance of a conventional window but has improved properties by virtue of using a plastic rather than a wooden core. For example, such a window would be lighter than a conventional window and therefore easier to transport and fit.

These roof windows have favourable properties in relation to one or more of weather resistance, insulation, strength, cost, ease of fabrication and recyclability.

### Brief Description of Drawings

The present invention will now be described, by way of example, by reference to the accompanying drawings in which:
Fig. 1 is a perspective view of a roof window in an open state seen from the exterior,
Fig. 2a is a perspective view of a window sash frame seen from the exterior and from the bottom,
Fig. 2b is a schematic perspective view of the window sash frame in Fig. 2a seen from the interior and from the top,
Fig. 3 is a schematic cross-sectional view of the side of a prior art roof window,
Fig. 4 is a schematic cross-sectional view of the side of a new roof window,
Fig. 5 is a schematic cross-sectional view of the side of a new pane unit,
Fig. 6 is a schematic cross-sectional view of the side of another new pane unit,
Fig. 7 is a schematic cross-sectional view of the side of still another new pane unit,
Fig. 8 is a schematic cross-sectional view of the side of still another new pane unit,
Figs 9a-9d are schematic views of roof windows seen from the exterior,
Fig. 10 is a schematic view of a cross section in a sash frame in a plane parallel to the plane of the pane element,
Fig. 11 is a schematic view of an Exjection^{®} process,
Fig. 12 is a schematic view of the Exjection^{®} process shown in Fig. 11 with more of the element formed,
Fig. 13 is a schematic view of an alternative Exjection^{®} process,Fig. 14 shows a frame for a centre-hung roof window in a perspective view with core members depicted along a top frame member and a side frame member,
Fig. 15 shows a core framework for a sash for a centre-hung roof window and a sash made with such a core framework in a perspective view,
Fig. 16 shows the core framework of Fig. 15 in an exploded view with two parts of the core framework arranged one above the other,
Fig. 17 shows the two parts of the core of Fig. 16 next to the sash of Fig. 15,
Fig. 18 corresponds to Fig. 17 but seen from a different perspective,
Fig. 19 shows a cross-section through the sash in Fig. 14 as indicated by the arrows VI,
Fig. 20 shows a core framework for a stationary frame of a sky-light in a perspective view,
Fig. 21 shows one of the core members used for making the core framework in Fig. 20,
Fig. 22 shows another embodiment of a core framework for a sash as shown in Fig. 15 in an exploded view,
Fig. 23 shows still another embodiment of a core framework for a sash as shown in Fig. 15 in an exploded view, and
Fig. 24 is analogous to Figure 5, except that it shows an Exjected sash core member encapsulated with polyurethane.

### Description of Embodiments

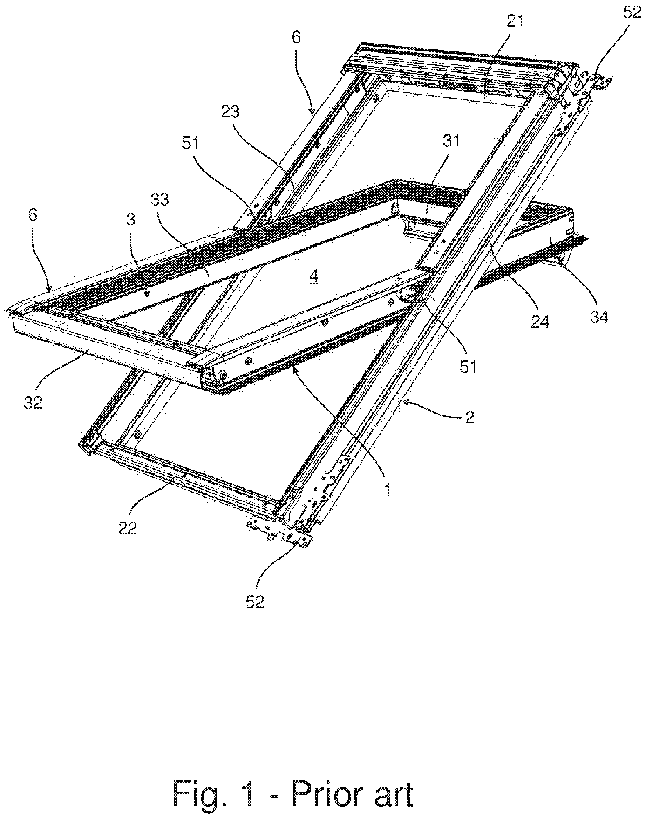

Fig. 1 shows a roof window including a pane unit 1 connected to a stationary frame 2. The pane unit 1 includes a sash frame 3, a pane element 4 and hinges 51 connecting the sash frame 3 to the stationary frame 2. In addition to the hinges 3 the stationary frame 2 is provided with further connectors 5 in the form of mounting brackets 52. A system 6 of cladding and covering elements are provided both on the sash and the frame in order to weatherproof the roof window, particularly to prevent water from entering the gap between the sash frame and the stationary frame, but also to protect the frame elements from ultraviolet radiation and other weather-related effects.

The stationary frame 2 and the sash frame 3 each include a top element 21, 31, a bottom element 22, 32, and side elements 23, 24, 33, 34 extending between the top element and the bottom element.

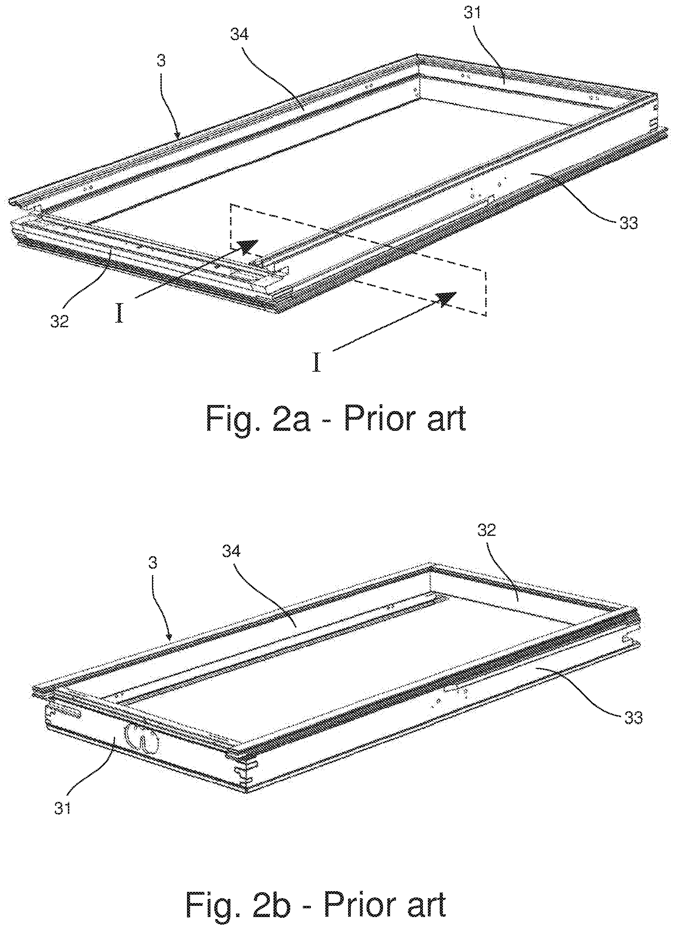

Fig. 2a and 2b show the sash frame 3 in Fig. 1 stripped from all connectors, covering elements and cladding elements, as well as the locking assembly (not shown) used for locking the sash frame to the stationary frame when the roof window is in the closed state of the window in a manner known to the skilled person.

Top element 31, bottom element 32 and side elements 33 and 34 can be seen. Side members 33 and 34 are not uniform throughout their length, but rather incorporate various cut-outs and channels to enable the parts to be affixed to others. The side elements 33, 34 interconnect with the top and bottom elements 31, 32 in an overlapping structure at the corners of the sash frame 3. Top element 31 includes a recess into which a lock can be positioned. Bottom element 32 has an elongate recess into which an elongate handle can be positioned for opening and closing of the window. The bottom element 32 forms a recess to allow the pane to extend across it in order to ensure water tightness.

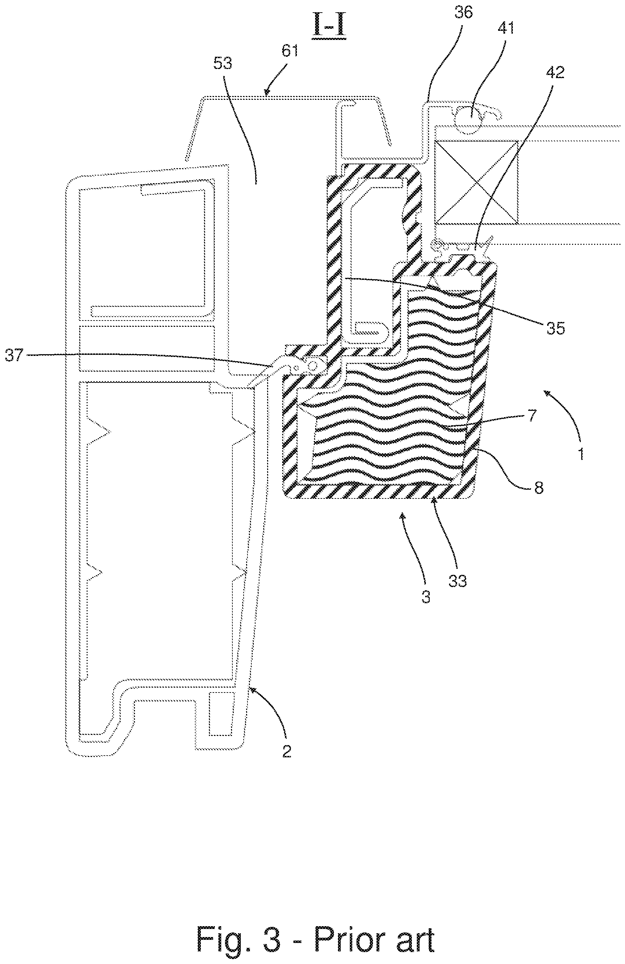

A cross-section of the side of a prior art window is shown in Fig. 3. The location of the cross-section I-I is shown in Fig. 2, however for a similar roof window at a side element 33, 43 of the sash frame and stationary frame. In this as well as in the remaining figures, the same reference numbers are used as in Figs 1 and 2 for elements having the same function even though they are embodied differently.

The sash frame 3 is here made by inserting an insulation 7 and a reinforcement element 35 in an extruded profile 8, and the pane element 4 is attached to the sash frame 3 by means of a glazing strip 36. Gaskets 41, 42 seal the joints between the pane element 4 and the glazing strip 36 and between the pane element 4 and the sash frame 3, respectively, and a further gasket 37 seals the joint between the sash frame 3 and the stationary frame 2. The space 53 between the upper parts of the stationary frame 2 the sash frame 3 is adapted for accommodating a hinge, which is present further down the side of the window and therefore not visible here, and this space 53 is covered by a cladding element 61 for weather-proofing. In pivot roof windows the space 53 may be occupied by the pivoting frame on the lower part of the frame (below the pivot hinge). In pivot roof windows the space 53 may be occupied by the fixed frame on the upper part of the frame (above the pivot hinge).

The stationary frame 2 is made in the same way as the sash frame 3, except for having a different geometry.

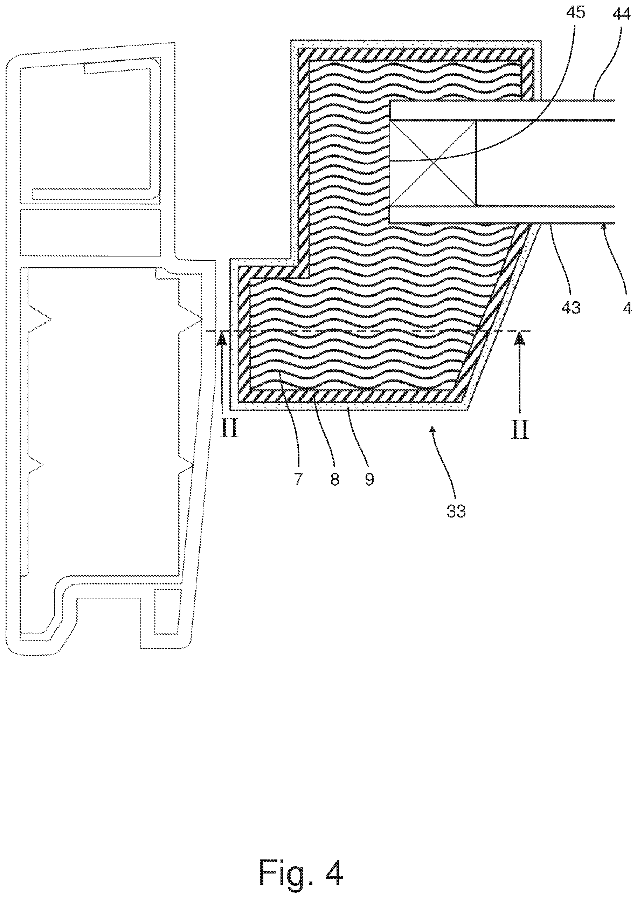

A similar roof window in a similar cross-sectional view, but where the sash frame 3 is a pane unit made according to the invention, is shown in Fig. 4.

Here too, the sash frame includes an insulation 7 surrounded by a strengthening portion 8, but the insulation surrounds the rim of the pane element 4 on all three sides, and an outer layer 9 envelops the insulation 7 and the strengthening portion 8. Preferred embodiments of a method of manufacturing of a frame element of a roof window, will be described in further detail below.

The outer layer 9 protects the insulation 7 and the strengthening portion 8 and provides desired surface properties to the window. This allows particularly the strengthening portion 8 to be made from a material which would not have been useable in the prior art window in Fig. 3, for example because of insufficient resistance to ultraviolet radiation from sunlight. In addition, the outer layer may assist in keeping the remaining part of the sash frame together and in providing weather tight joints at the pane element, thus potentially making the use of gaskets unnecessary.

The fact that the insulation extends along both the interior side 43, the exterior side 44 and the outer side 45 of the pane element provides both excellent insulation properties to the pane unit and a fixation of the pane element in relation to the sash frame. However, it will be understood that whilst the pane element 4 is shown as being surrounded by insulation 7, in alternative embodiments this will not occur and the insulation 7, strengthening portion 8 and outer layer 9 will not protrude beyond the outer side 45 of the pane element. Thus, in these alternative embodiments the insulation does not extend along either the interior side 43 or the exterior side 44.

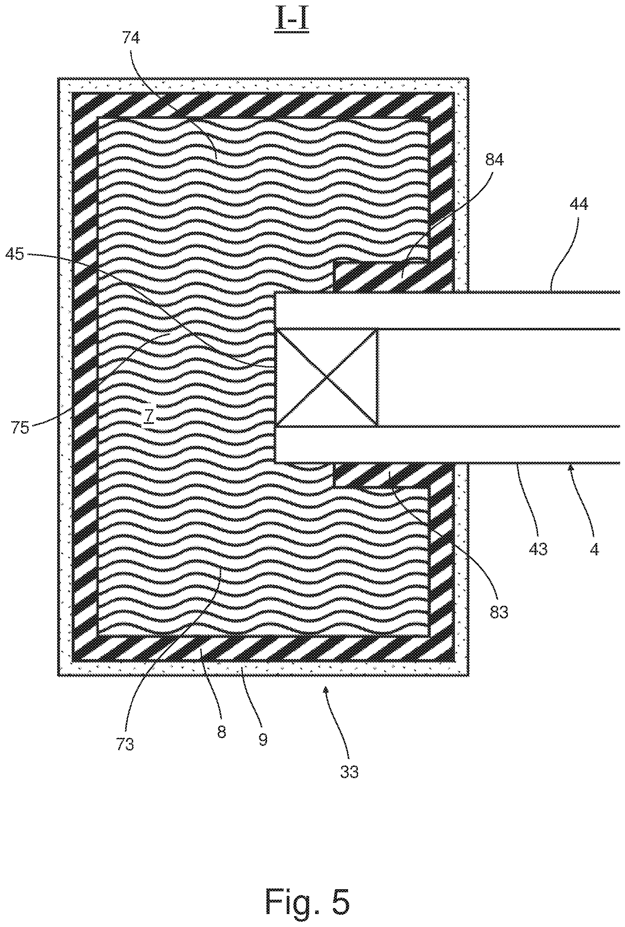

Fig. 5 shows an alternative embodiment of a pane unit in a view at a similar location as in Fig. 4, where the frame element simply has a rectangular cross-sectional shape in over to illustration that alternative and simpler shapes than the one in Fig. 4 are possible.

Here the pane element 4 is located somewhat deeper in order to improve the insulation properties of the pane unit even further, and where the strengthening portion 8 is provided with flanges 83, 84 extending along the interior side 43 and the exterior side 44 of the pane element to improve the stiffness of the pane unit.

Similar to Fig. 4, the insulation 7 comprises an insulation segment with three sections 73, 74, 75 correspondingly located adjacent to the interior 43, exterior 44, and outer side of the pane element 4. The sections encapsulate the rim of the pane element 4 on the interior 43, exterior 44, and outer side 45 of the pane element 4. The sections are continuous such that they form a unified whole without any cut-lines. The insulation segment extends along the entire length of the side element 33 of the sash frame 3. Similar insulation segments are provided in the remaining elements 31, 32, 34 of the sash frame 3.

In alternative embodiments, there is no encapsulation of the pane element 4 at the interior side 43 or exterior side 44.

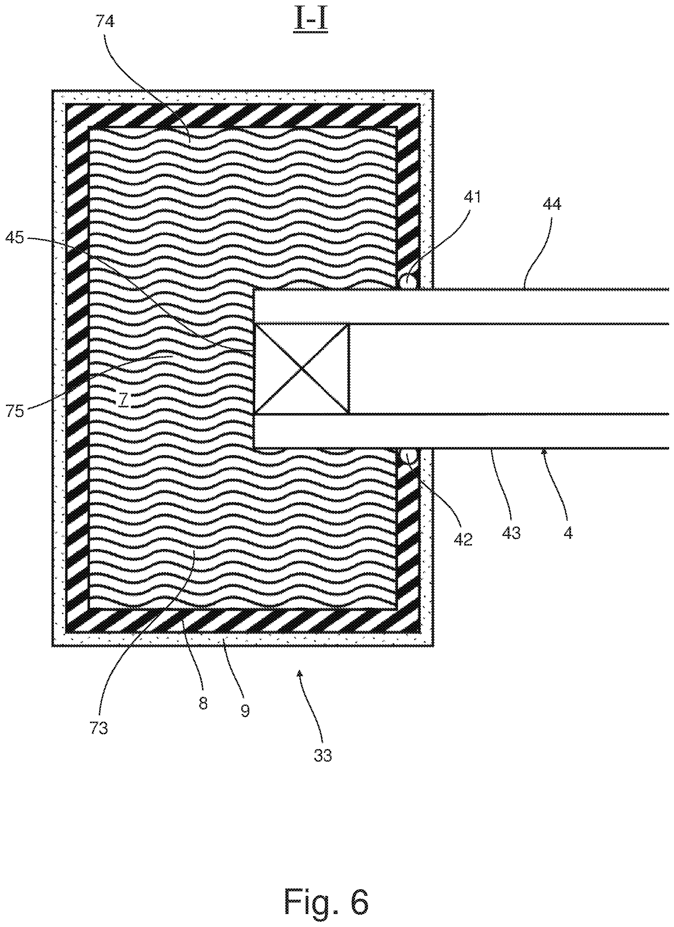

Fig. 6 shows an alternative embodiment of a pane unit in a view similar to Fig. 5, where the pane unit comprises sealing elements 41, 42 in the form of gaskets. These sealing elements 41, 42 seal the joints between the pane element 4 and the sash frame 3. The sealing elements have the shape of an O-ring gasket but may have any other suitable shape, for instance a flat gasket or an extruded sealant. The sealing elements are shown located between the strengthening portion 8 and the pane element 4.

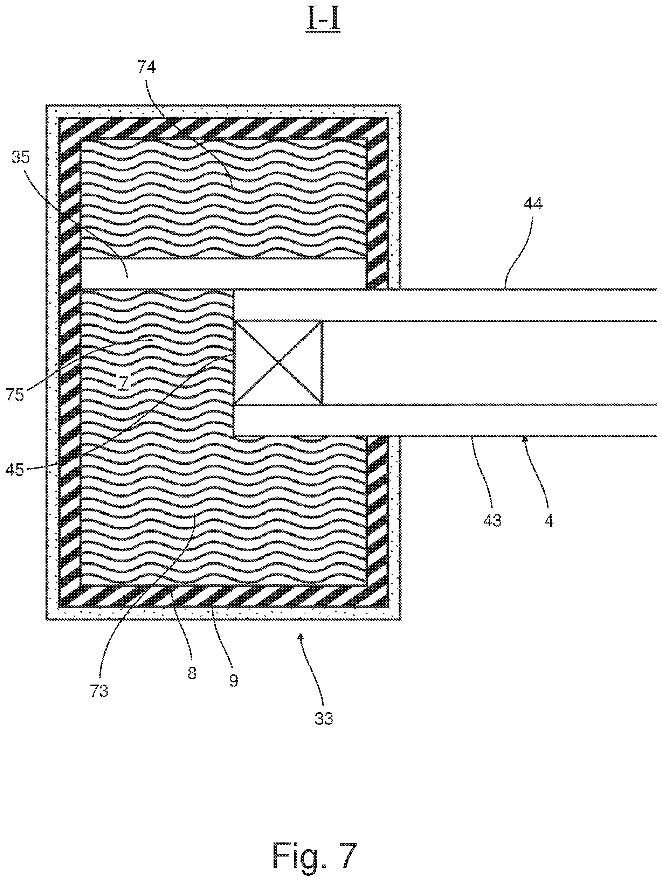

Fig. 7 shows an alternative embodiment of a pane unit in a view similar to Fig. 5, where the pane unit comprises additional function elements in the form of a reinforcement 35. The reinforcement 35 is in the form of a sheet profile embedded in the insulation 7. The reinforcement 35 is oriented parallel to the pane element 4. The reinforcement 35 is located in contact with the exterior side 44 of the pane element 4. The reinforcement extends along part of the length of the side element 33 in the vicinity of a hinge part to provide local stiffness near the hinge.

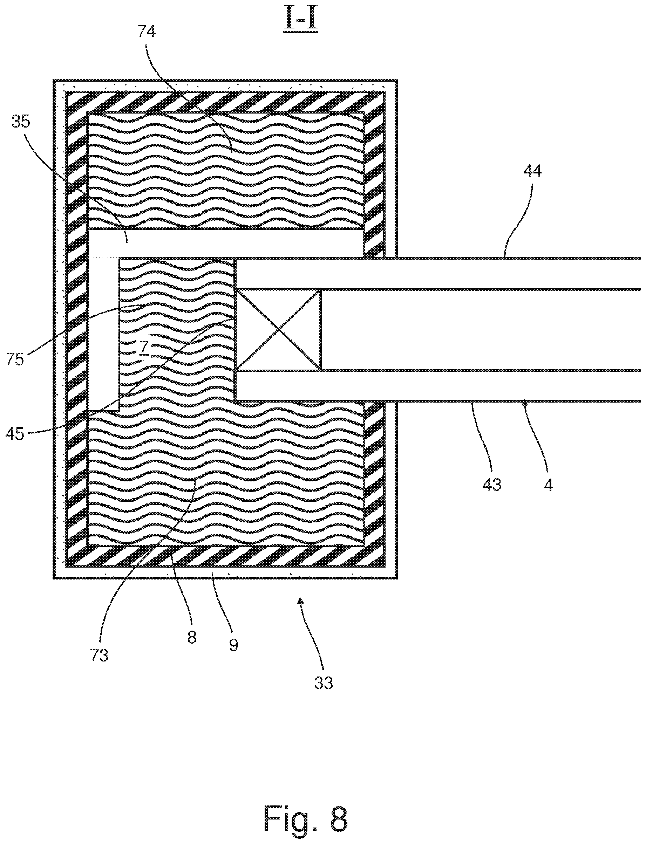

Fig. 8 shows an alternative embodiment of a pane unit similar to Fig. 7, where the reinforcement 35 comprises, in addition to the parallel portion described above, a perpendicular portion arranged perpendicular to the pane element 4, the perpendicular portion is arranged outermost in the outer section 75. The reinforcement is formed by a bended sheet material, such as steel.

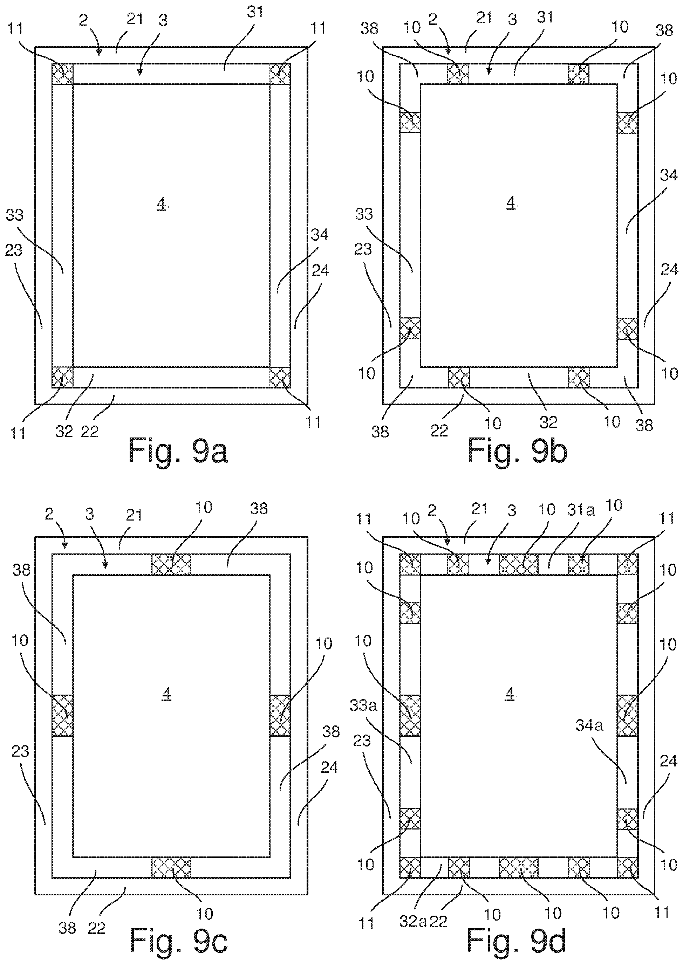

Figs. 9a-9d shows an alternative embodiment of a roof window comprising a stationary frame 2 and a pane unit 1. In Fig. 9a, the frame element 3 comprises four frame segments: a top 31, bottom 32, and two side segments 33, 34. Each frame segment comprises an insulation segment. In this embodiment each frame segment is provided at a length that allows each pair of adjacent segments to overlap and snap fit onto each other at corner attachments 11.

In Fig. 9b the frame element 3 additionally comprises four corner segments 38. The segments are attached in straight attachments 10 by the same attachment as in Fig. 9a.

In Fig. 9c the frame element comprises four corner segments 38 attached at straight attachments 10.

In Fig. 9d the frame element 3 comprises all the corner 11 and straight attachments 10 of Fig. 9a-9c, and the frame element 3 is formed by corresponding straight segments, where only the first of each is numbered 31a, 32a, 33a, 34a.

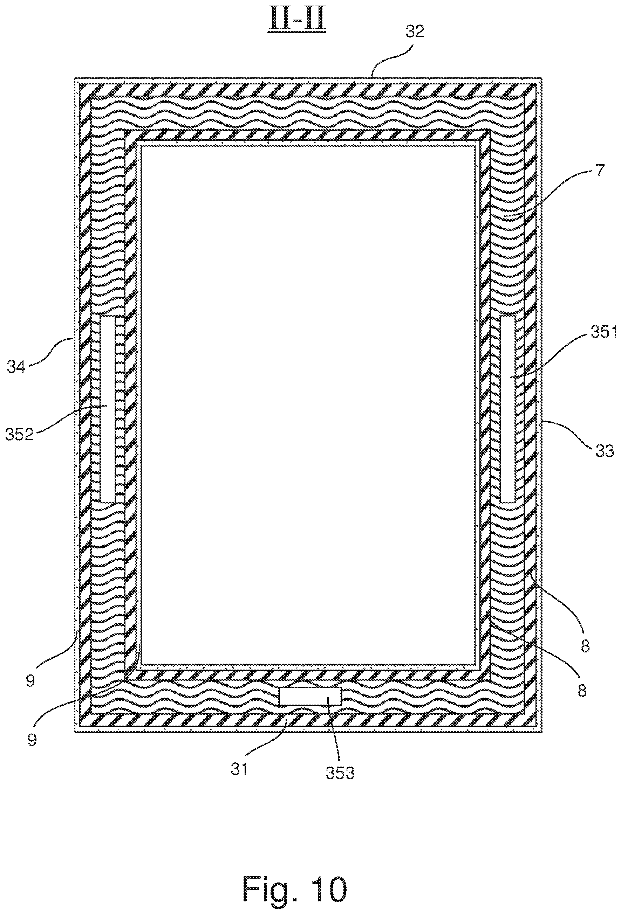

A cross section of a frame element formed according to the present invention is shown in Figure 10. The frame element comprises four parts: a top 31, bottom 32 and two sides 33, 34. Insulation 7 is present in all four parts and is surrounded by strengthening portion 8, which is made from thermoplastic. Outer layer 9 envelops the insulation and strengthening portion. Side 33 additionally comprises reinforcement member 351 and side 34 additionally comprises reinforcement member 352. These reinforcement members provide reinforcement in the region of the hinge. Top 31 comprises reinforcement member 353 which provides additional reinforcement in the region of the lock. The so-called "half-shell" shown in this figure can be combined with another half-shell and a pane using any suitable method to form a completed roof window.

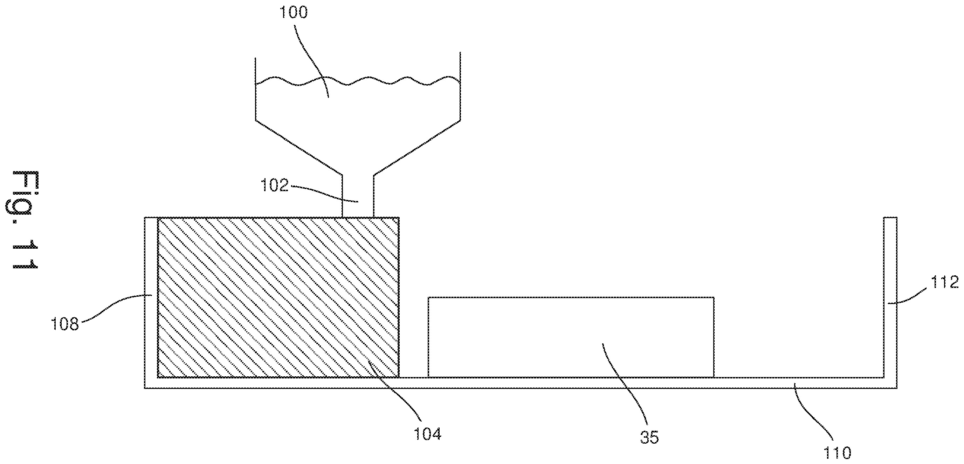

A schematic representation of a method of the present invention is shown in Figure 11. Liquid thermoplastic 100 is introduced through inlet 102 into mould cavity 104 and begins to fill the cavity. In the embodiment shown, reinforcement member 35 has been positioned in the mould before introduction of the liquid thermoplastic commenced, although this is optional. The injection inlet 102 moves in one plane. When forming the components, the injection inlet 102 plane may for example be the plane defined by the window pane or the planar inner surface of the frame facing the interior. The injection inlet 102 plane must be situated at a flat surface extending along the component.

Reciprocating mould blanks (not shown) can be present and move perpendicular to the injection plane. The mould blank is moved into the mould before the injection and creates a hollow section in the component. This provides an effective means to form a closed cell structure which can be useful in forming core members with a cellular structure. These exhibit good strength characteristics.

The outer peripheries of the mould cavity are defined by edges 108, 110 and 112. One or more of the edges may be moveable to adjust the volume of the mould cavity 104.

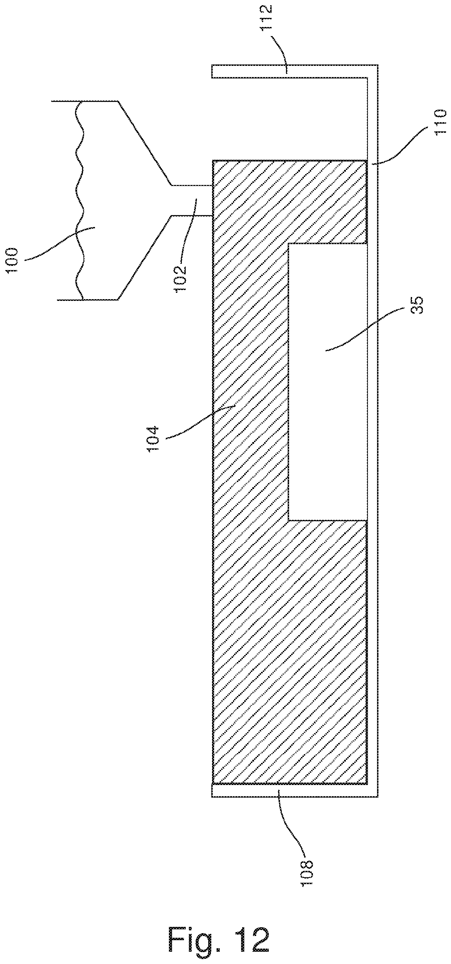

Figure 12 shows a later stage of the process shown in Figure 11 in which more of the component has been formed. As can be seen, the inlet 102 has moved relative to the first edge 108 and additional liquid thermoplastic 100 has been added to the mould cavity 104. The injection inlet 102 acts as a temporary cover until the polymer solidifies. The injection inlet 102 defines part of the mould cavity 104 when it moves in the injection plane.

One or both of edges 108, 112 may be moveable to release the element formed from the mould. This can occur once the element has been fully formed, or whilst another region of the element is being moulded.

The disclosed injection method allows 3D shapes whereas an extruded profile has a 2D shape only. Hereby 3D roof window frame elements can be incorporated integrally into the frame profiles. 3D roof window frame elements are for example water drain elements, strength elements or connection elements. Water drain elements include channels and overlapping portions which ensure water drains from the window surface towards the roof surface. Strength elements include protrusions/recesses which hold in-moulded or installed reinforcement profiles or window hardware. Connection elements include countersunk portions and corresponding overlapping portions which allow the frame parts to be assembled with a flush outer surface.

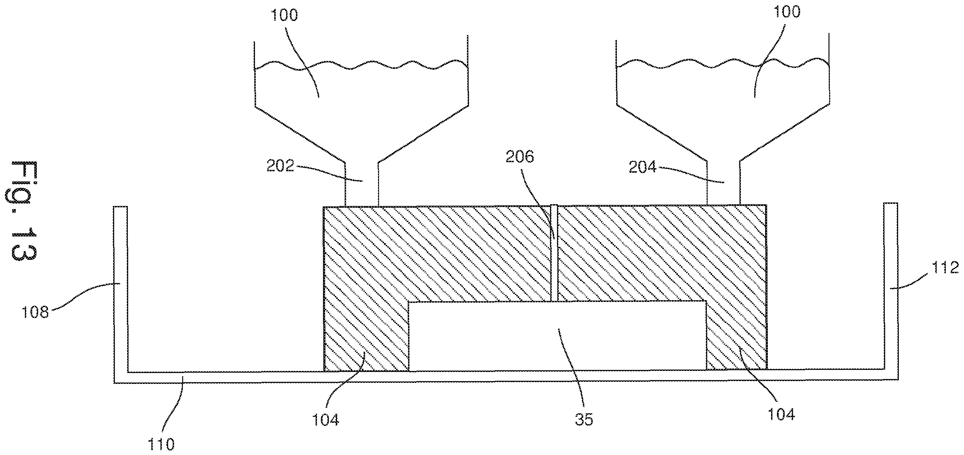

A modification of the process is shown in Figure 13. Here, two inlets 202, 204 are used to introduce liquid thermoplastic 100 into the cavity 104. In the embodiment shown, the inlets 202, 204 move relative to the cavity and away from one another. However, it will be understood that the inlets 202, 204 may alternatively move in the same direction as one another. The outer peripheries of the mould cavity are defined by edges 108, 110 and 112.

A divider 206 is shown which prevents mixing of liquid thermoplastic from each inlet. Whilst this is desirable for some embodiments, it will be understood that it is not compulsory for all. The divider is shown as being in contact with reinforcement member 25. In other embodiments in which a divider is present, the divider may be positioned on either side of the reinforcement member 25.

Even though the description above, particularly in relation to Figs 4-8, has focussed primarily with reference to a side frame element, it will be understood that top and bottom frame elements may be embodied in the same way. Usually, however, the top and bottom elements will have different cross-sectional shapes as also illustrated by Figs 2a and 2b, and the shape of the side frame element may also vary over their length. Likewise, the reinforcement may vary and may be present only at sections of the frame element, for example at the hinges and/or at the corners.

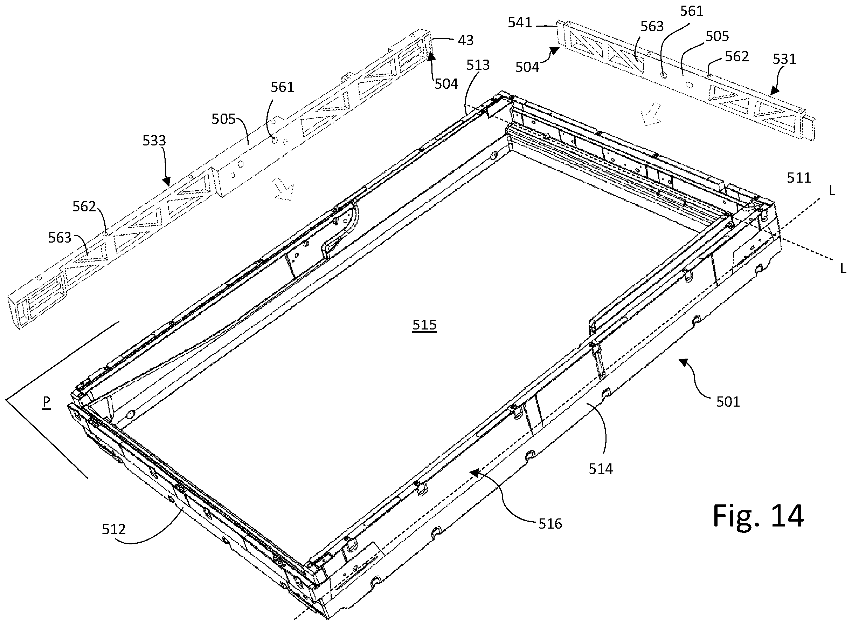

A frame 501 for use as a stationary frame for a centre-hung roof window is shown in Fig. 14. The frame includes a top frame member 511, a bottom frame member 512, and two side fame members 513,514. Each of these frame members has a longitudinal direction L (shown only at the top and right side) and together they define a frame plane P (indicated in the lower left corner). An inner opening of the frame 515 is delimited by the frame members.

The frame is composed of a core member, which has been over-moulded with a surface layer 516 which gives the frame desired surface properties by defining its outer shape. In this case the surface layer is made from polyurethane, thus also making the frame waterproof and suitable for use without being painted. Other materials may provide other properties and may need surface treatment for waterproofing.

In Fig. 14, the surface layer 516 covers the core member entirely, but it is also possible to leave smaller sections of strengthening portion uncovered, for example to facilitate the insertion of screws, pins or other fasteners, which need to be connected to the core member, or to allow ventilation of the strengthening portion.

Core members 531 and 533 within the frame 501 are shown along the top frame member 511 and left side frame member 513, respectively, in Fig. 14. These core members are adapted for being interconnected with two similar members at the right side and at the bottom, respectively, by being provided with connectors 504. In this embodiment the top core member 531 is provided with projections 541 adapted for being inserted in openings in the side core members 533. The engagement between the openings and the projections may be stabilized for example by a tight fit, by snap-locking, by fasteners being inserted into both parts, or by gluing or welding. It is, however, also possible that they are just fitting loosely and that a stable connection is achieved by the moulding material used for the surface layer flowing in between them and fixing them in relation to each other.

In another embodiment (not shown) all core members are provided with openings and separate corner brackets are used for interconnecting them.

At the centre of each core member is a reinforcement section 505, which is positioned where locking assemblies and hinges (not shown) will be secured to the finished frame 501. The bigger cross-section and additional material at these sections allow the core member to better take up forces transmitted from the locking assemblies and hinges. It is also possible to include parts consisting wholly or partially of different material, such as metal or glass fibre, in the reinforcement sections 505.

Separate reinforcement members are preferably made from a material chosen from the group consisting of steel, aluminium, pultruded profile, wood, natural fibres, carbon fibres, glass fibre tape, plastic or combinations thereof.

Openings 561 in the reinforcement sections are intended for receiving mounting pins or other fasteners used for attachment of the locking assemblies, hinges, etc. These openings may be filled partially by the material used for the surface layer in order to ensure a continuous surface on the frame.

Other openings 562 are provided for receiving other fasteners used, for example for attachment of covering and cladding members, and similar openings on a sash may be used for attachment of a pane.

Still further openings 563 are provided in order to give the individual core member 531, 533 and consequently the resulting frame or sash the desired strength and stiffness. Depending on how the mould used for making the surface layer is embodied, these openings will be filled wholly or partially with the moulding material used.

The straight sections of the core members 531, 533 delimit the openings 563 such that at least one closed cell is found in the core member. What is seen in Fig. 14 is thus a shell defining an outer surface of the core member. As can be seen, there are a plurality of strengthening ribs and/or flanges extending from the shell in order to provide extra strength and stiffness.

The reference numbers used on the strengthening members 531,533 in Fig. 14 have also been used in the remaining figures for features having substantially the same function and these features will not be described in further detail.

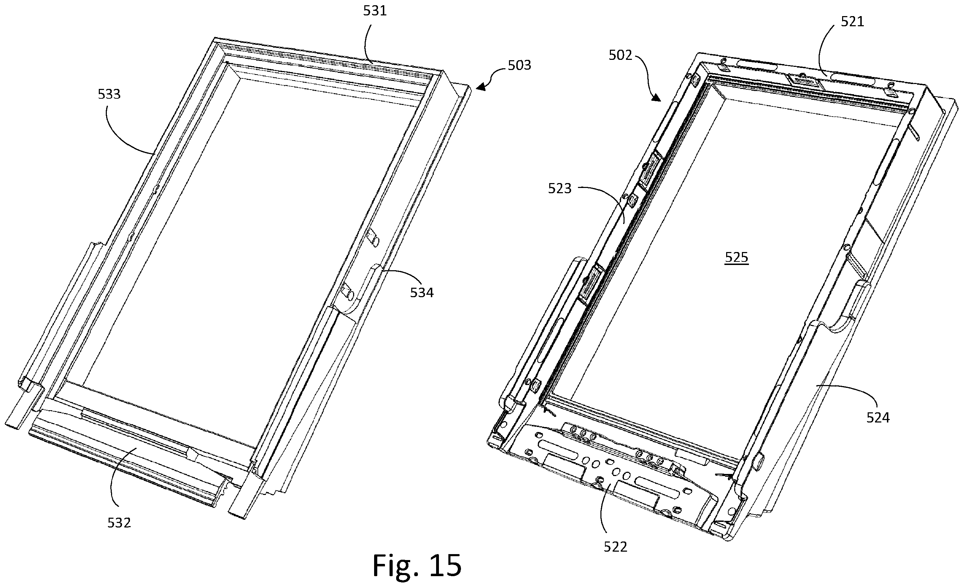

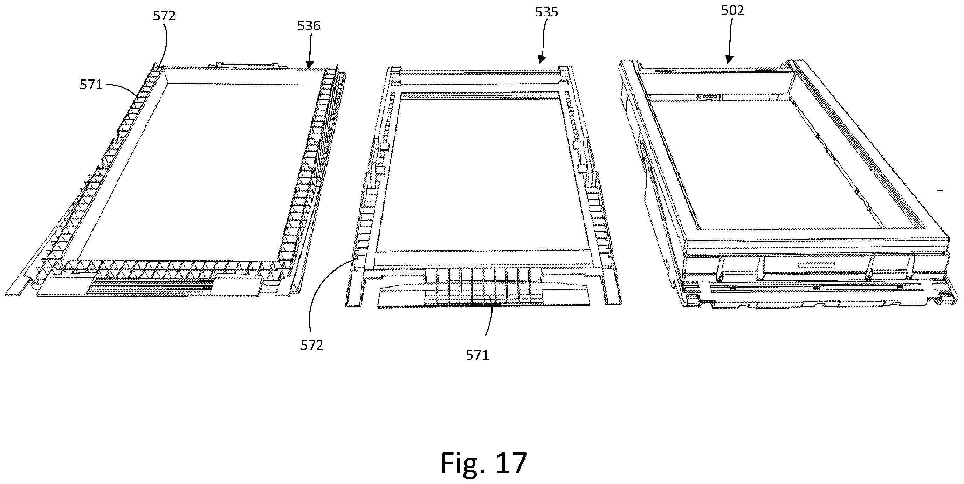

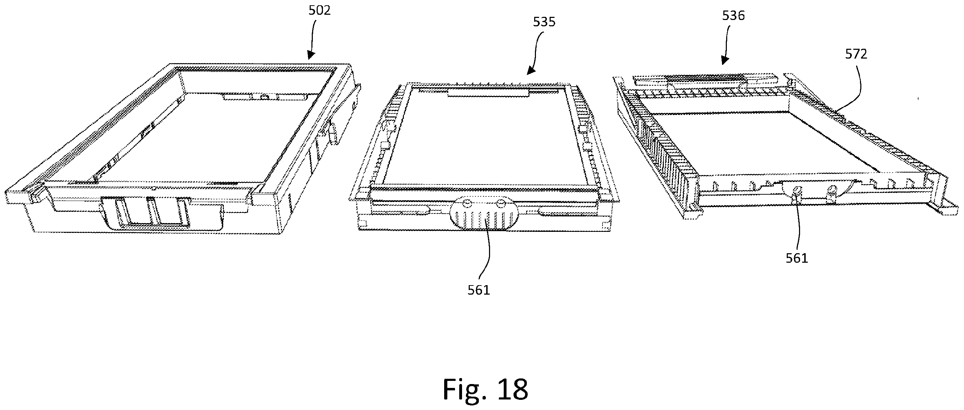

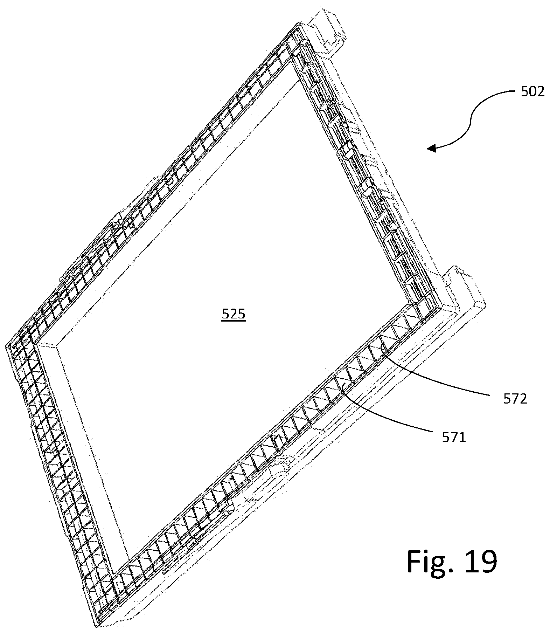

Fig. 15 shows a frame 502 for use as a sash for a centre-hung roof window and a core framework 503 for use therein. As described with reference to the frame 501 above, the sash 502 includes a top sash member 521, a bottom sash member 522 and two sides sash members 523, 524 delimiting a sash opening 525, and the core framework includes corresponding core members, i.e. a top core member 531, a bottom core member 532, and two side core members 533,534. The core members 531,532,533,534 are not separate interconnected members as described with reference to Fig. 14, but rather are half-shells. It is, however, to be understood that unless otherwise stated the details described with reference to Fig. 14 could also be applied in a frame intended for use as a sash, and that the details described with reference to Figs 15-19 also apply to frames intended for use as stationary frames.

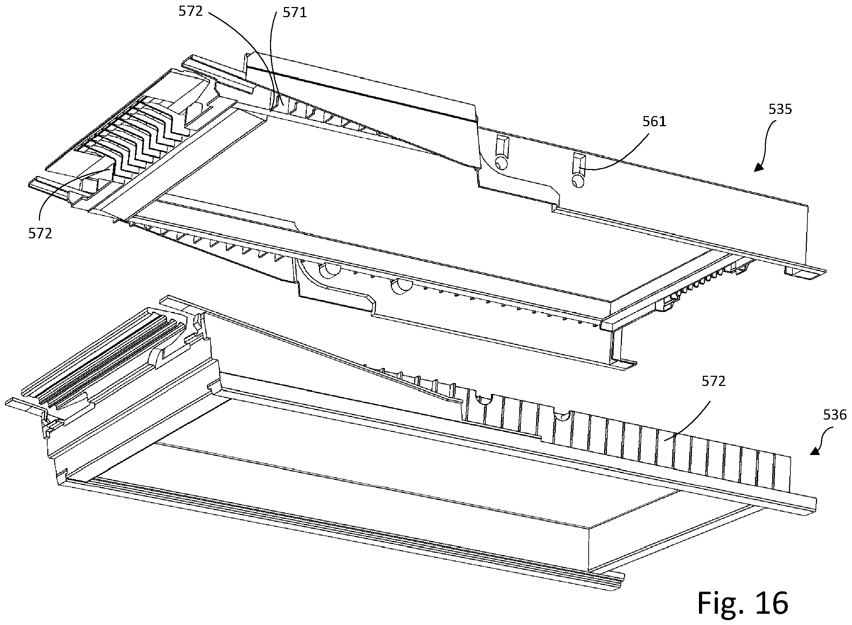

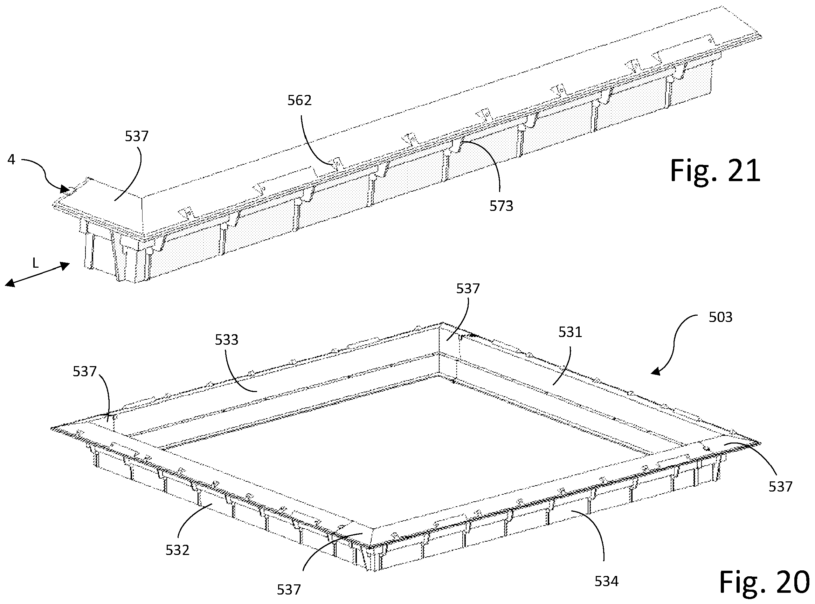

Figs 16-18 show more details of the core member/core framework and sash shown in Fig. 15. In Fig. 16, the core framework is shown in an exploded view and it is seen that it is composed of two parts, an upper half-shell 535 and a lower half-shell 536. Each of the half-shells 535,536 include a plurality of ribs and flanges 572, and when the half-shells are interconnected, these ribs and flanges de-limit a plurality of closed cells 571.An alternative embodiment is shown in Figs 20 and 21. Here, the core is adapted for use in the frame of a sky-light, i.e. in a window adapted for being installed in a flat roof. Each core member includes a corner section 537, which extends in the frame plane and perpendicular to the longitudinal direction L so that in the assembled state it extends in parallel with the longitudinal direction of another core member.

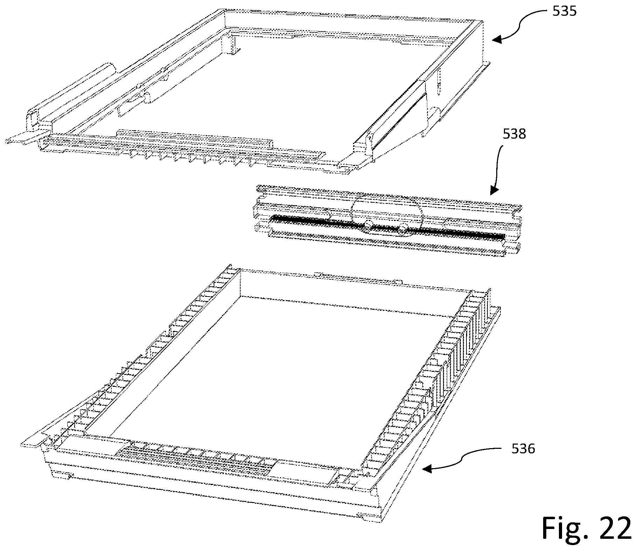

Fig. 22 shows an embodiment corresponding substantially to that shown in Fig. 14, but as may be best seen by comparing to Fig. 16, it includes a separate top core member 538 in addition to the two half shells.

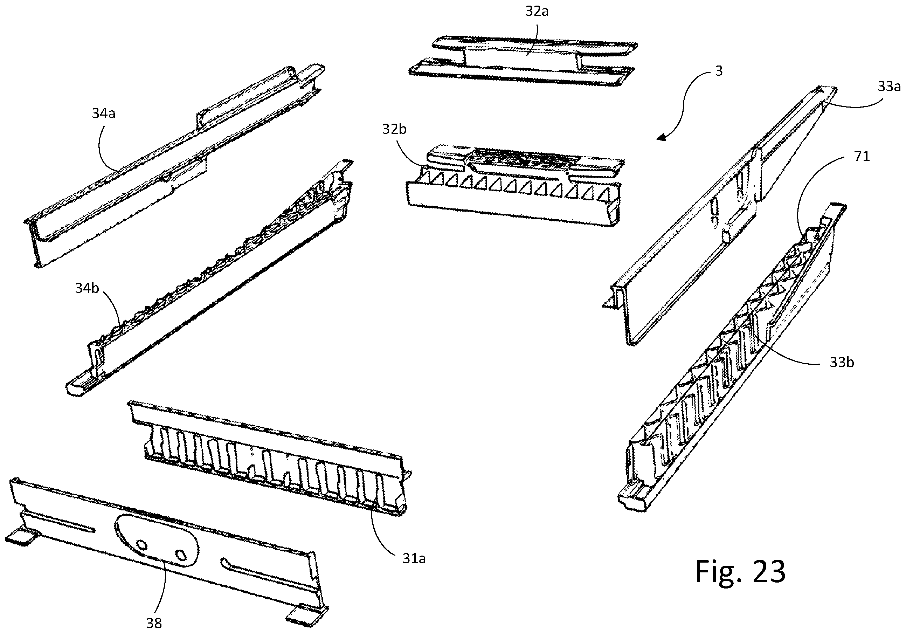

A still further embodiment consisting of eight separate core members is shown in Fig. 23. This embodiment combines the advantages of using separate members with the advantages of using half-shells. The top core member is composed of an upper part 531a and a lower part corresponding to the separate member 538 shown in Fig. 22, the bottom core member is composed of an upper part 532a and a lower part 532b, and the side core members are composed of upper parts 533a,534a and lower parts 533b,534b. This embodiment too includes closed cells 571 defined by ribs and flanges on the upper and lower parts coming together when parts are assembled.

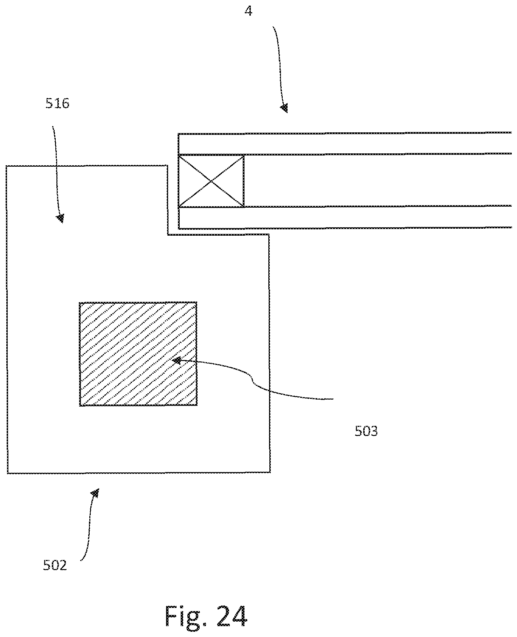

Fig. 24 shows an alternative embodiment to Figure 5 in which the core member has a polyurethane encapsulation and the glazing pane is not encapsulated by the sash.

Table 1 gives possible choices of material and manufacture of the insulation, which may be combined in different ways depending on demands.

Table 2 gives possible choices of material and manufacture for the outer layer.

Table 3 gives possible choices of shape of elements formed and methods of connecting them.

**Table 1 - Insulation**

| Solution no. | 1 | 2 | 3 | 4 | 5 | 6 | 7 | 8 | 9 | 10 |
|---|---|---|---|---|---|---|---|---|---|---|
| Material | Expanded polypropylene (EPP) | Expanded polystyrene (EPS) | Polyurethane (PUR) | Expanded polyester (EPET) | Expanded polylactic acid (EPLA) | Mineral wool | Natural fibres | Aerogel | Air | Vacuum |
| Concept | Pre-produced | Produced on pane element | Produced in strengthening portion | Combinations | | | | | | |
| Production | Expanded in mould | Expanded in strengthening | Expanded and extruded | Vacuum formed | Milled | 3D printed | Cast | Blowing/ suction | Combinations | |

**Table 2 - Outer layer**

| Solution no. | 1 | 2 | 3 | 4 | 5 | 6 | 7 |
|---|---|---|---|---|---|---|---|
| Material | PP, Acryl Nirtil Styren Acrylat (ASA), SAN Styren Acryl Nitril (SAN), PC/PBT Polycarboat med PET eller PBT polybutylenter-ephthalate, PC polycarbonat | Aluminium | Other metal | Rubber | Natural fibres | Combinations | |
| Flame retardant | None | With additives | Foil | Aluminium | | | |
| UV stabilizer | None | With additives | Foil | Aluminium | Paint | | |
| Resist to cleaning etc. | None | Paint including lacquer | Plastic layer | Foil in moulded | Aluminium | Metallization | |
| Integrated devices | None | Electrical wiring | Electrical connectors | Electronic devices such as solar cells or rain sensors | Conductive material | | |
| Production | Moulding | Spraying | Foil in mould | Printing | Painting | Attached using adhesive | Attached using mechanical fasteners |

**Table 3 - Construction**

| Solution no. | 1 | 2 | 3 | 4 | 5 | 6 | 7 | 8 |
|---|---|---|---|---|---|---|---|---|
| Frame design | 1 Part Sash | 2 Half shells | 4 Profiles | 4 Half shells | 4 corners & 4 profiles | 4 Half shell corners & 4 Half shell profiles | 2 C-Shaped parts | 2 C-Shaped half shells |
| Joining techniques | No | Gluing | Laser welding | Ultrasonic welding | Heat welding | Snap-fit | Screws | Brackets |
| Integration of hinges | Over-moulded | Glued | Moulded snap-part for hinge | Bolted | Screwed | | | |
| Integration of pane | Retained by glazing strips | Encapsulated in strengthening portion | Inside half shell | Inside pre-made strengthening portions | Encapsulated in insulation | Retained by glue | Retained by bolts | |

A person skilled in the art will appreciate that the above-described detailed embodiments may be combined to form other embodiments falling within the scope of the present invention.

### List of Reference Numerals

Figures 1 - 13
- 1: pane unit
- 2: stationary frame
- 21: top element
- 22: bottom element
- 23, 24: side elements
- 3: sash frame
- 31: top element
- 32: bottom element
- 33, 34: side elements
- 35: reinforcement profile
- 36: glazing strip
- 37: gasket
- 3: frame element
- 31: top segment
- 32: bottom segment
- 33, 34: side segments
- 38: corner segment
- 10: straight attachment
- 11: corner attachment
- 43: interior side
- 44: exterior side
- 45: outer side
- 5: connectors
- 51: hinge
- 52: mounting brackets
- 53: space
- 6: system of cladding and covering elements
- 61: cladding element
- 7: insulation
- 73: interior section
- 74: exterior section
- 75: edge section
- 8: strengthening portion
- 83, 84: flanges
- 9: outer layer
- 351: first reinforcement member
- 352: second reinforcement member
- 353: third reinforcement member
- 100: liquid thermoplastic
- 102: inlet
- 104: mould cavity
- 108: first edge
- 110: second edge
- 112: third edge
- 202: first inlet
- 204: second inlet
- 206: divider
- Figures: 14 - 24
- 501: frame
- 502: sash
- 503: core framework
- 504: connectors
- 505: reinforcement section
- 511: top frame member
- 512: bottom frame member
- 513, 514: side frame members
- 515: inner opening of the frame
- 516: surface layer
- 521: top sash member
- 522: bottom sash member
- 523, 524: side sash members
- 525 sash: opening
- 531: top core member
- 531a: upper part of top core member
- 532 bottom: core member
- 532a: upper part of bottom core member
- 532b: lower part of bottom core member
- 533, 534: side core members
- 533a: upper part of side core member
- 533b: lower part of side core member
- 534a: upper part of side core member
- 534b: lower part of side core member
- 535: upper half shell
- 536: lower half shell
- 537: corner section
- 538: separate top core member
- 541: projections
- 561: opening
- 562: other openings
- 563: still further openings
- 571: closed cells
- 572: ribs/flanges

## Claims

1. A method of manufacturing a component of a roof window frame or sash (502), the method comprising the steps of:
- providing a thermoplastic (100) with a melting temperature in the range of 100 - 300°C;
- providing a mould comprising a cavity (104), the cavity being defined by a plurality of boundary members, the volume of the cavity being adjustable;
- heating the thermoplastic to a temperature at which it melts;
- introducing the liquid thermoplastic into the mould cavity via an inlet (102);
- increasing the volume of the mould cavity by moving at least one of the boundary members and providing relative motion between the inlet and the mould cavity whilst introducing further liquid thermoplastic such that the liquid thermoplastic conforms to the expanded volume of the cavity;
- allowing the thermoplastic to harden so that it can maintain its shape without requiring support from the mould and releasing the hardened thermoplastic from mould;
wherein the thermoplastic contains filler in an amount of 10 - 70 % by weight,
and further wherein a mould insert is provided in the mould cavity, preferably before the liquid thermoplastic is introduced, the liquid thermoplastic being moulded around the mould insert, the mould insert being removed from the cavity after the thermoplastic surrounding the mould has hardened such that it can maintain its shape without requiring support from the mould insert, the removal of the insert forming a hollow region in the component of the roof window frame or sash.

2. A method of manufacturing a component of a roof window frame or sash according to Claim 1, wherein the component is a core member (531, 533) adapted to form part of a top frame member, bottom frame member, side frame member, top sash member, bottom sash member or side sash member, or combination thereof.

3. A method of manufacturing a component of a roof window frame or sash according to Claim 1, further comprising the step of providing the hollow region with insulation (7) after it has been formed, the insulation optionally being selected from the group consisting of expanded polypropylene, expanded polystyrene, polyurethane, expanded polyester, expanded poly-lactic acid, mineral wool, natural fibres, aerogel and mixtures thereof.

4. A method of manufacturing a component of a roof window frame or sash according to any preceding claim, wherein at least one item of hardware is provided in the mould cavity before or during the introduction of the liquid thermoplastic, the item of hardware being in-moulded into the component of a roof window frame or sash, the at least one item of hardware being selected from the group consisting of hinges (51), locks, brackets, electrical conductors, corner keys, fastener fittings, and glazing clips.

5. A method of manufacturing a component of a roof window frame or sash according to any preceding claim, wherein the mould cavity is provided with at least one reinforcement member (351, 352, 353), the reinforcement member being in-moulded into the thermoplastic to become part of the component.

6. A method of manufacturing a component of a roof window frame or sash according to any preceding claim, wherein the method comprises the step of forming at least one connection element in the component.

7. A method of manufacturing a component of a roof window frame or sash according to any preceding claim, wherein at least one of the mould cavity boundary members has one or more depressions or protrusions on its surface so that one or more protrusions, depressions, ribs, ridges, meshes, fins, connector elements, vent ducts or other surface structures are formed on the component.

8. A method of manufacturing a component of a roof window frame or sash according to any preceding claim, wherein one or more mould inserts are used to provide the component with a honeycomb structure or cellular structure formed from a plurality of ribs and/or flanges.

9. A method of manufacturing a component of a roof window frame or sash according to any preceding claim, wherein the method further comprises the step of at least partly encapsulating the component with plastic, wherein the plastic is optionally polyurethane.

10. A method of manufacturing a component of a roof window frame or sash according to any preceding claim, wherein the filler is present in the form of fibres, where said fibres can for example be glass fibres or be made from natural fibres, preferably cellulose.

11. A method of manufacturing a component of a roof window frame or sash according to any preceding claim, wherein the inlet (102) moves relative to the mould cavity and the movement occurs in more than one dimension.

12. A method of manufacturing a component of a roof window frame or sash according to any preceding claim, wherein part of the component is released from the mould whilst another part of the component is forming in the mould.

## Patentansprüche

1. Verfahren zum Herstellen einer Komponente eines Dachfensterrahmens oder -Flügels (502), das Verfahren die folgenden Schritte umfassend:
- Bereitstellen eines Thermoplasts (100) mit einer Schmelztemperatur im Bereich von 100 bis 300 °C;
- Bereitstellen einer Form, die einen Hohlraum (104) umfasst, wobei der Hohlraum durch mehrere Begrenzungselemente definiert ist, wobei das Volumen des Hohlraums anpassbar ist;
- Erhitzen des Thermoplasts auf eine Temperatur, bei der er schmilzt;
- Einfüllen des flüssigen Thermoplasts über einen Einlass (102) in den Formhohlraum;
- Erhöhen des Volumens des Formhohlraums durch Bewegen mindestens eines der Begrenzungselemente und Bereitstellen einer relativen Bewegung zwischen dem Einlass und dem Formhohlraum beim Einfüllen weiteren flüssigen Thermoplasts, so dass sich der flüssige Thermoplast an das erweiterte Volumen des Hohlraums anpasst;
- Ermöglichen, dass der Thermoplast aushärtet, so dass er seine Form halten kann, ohne Stützung durch die Form zu erfordern, und Herauslösen des ausgehärteten Thermoplasts aus der Form;
wobei der Thermoplast Füllmittel in einer Menge von 10 bis 70 Masse-% enthält,
und wobei weiterhin ein Formeinsatz in dem Formhohlraum bereitgestellt ist, vorzugsweise bevor der flüssige Thermoplast eingefüllt wird, wobei der flüssige Thermoplast um den Formeinsatz herum gegossen wird, wobei der Formeinsatz aus dem Hohlraum entfernt wird, nachdem der Thermoplast, der die Form umgibt, ausgehärtet ist, so dass er seine Gestalt erhalten kann, ohne eine Stützung durch den Formeinsatz zu erfordern, wobei die Entfernung des Einsatzes einen hohlen Bereich in der Komponente des Dachfensterrahmens oder -Flügels ausbildet.

2. Verfahren zum Herstellen einer Komponente eines Dachfensterrahmens oder -Flügels nach Anspruch 1, wobei die Komponente ein Kernelement (531, 533) ist, das eingerichtet ist, um einen Teil eines oberen Rahmenelements, unteren Rahmenelements, Seitenrahmenelements, oberen Flügelelements, unteren Flügelelements oder Seitenflügelelements oder Kombination davon auszubilden.

3. Verfahren zum Herstellen einer Komponente eines Dachfensterrahmens oder -Flügels nach Anspruch 1, weiterhin den Schritt des Versehens des hohlen Bereichs mit Isolation (7), nachdem er ausgebildet wurde, umfassend, wobei die Isolation gegebenenfalls aus der Gruppe ausgewählt ist, bestehend aus geschäumtem Polypropylen, geschäumtem Polystyrol, Polyurethan, geschäumtem Polyester, geschäumter Polymilchsäure, Mineralwolle, Naturfasern, Aerogel und Mischungen davon.

4. Verfahren zum Herstellen einer Komponente eines Dachfensterrahmens oder -Flügels nach einem der vorhergehenden Ansprüche, wobei mindestens ein Hardware-Artikel vor oder während der Einfüllung des flüssigen Thermoplasts in dem Formhohlraum bereitgestellt wird, wobei der Hardware-Artikel in die Komponente eines Dachfensterrahmens oder -Flügels eingegossen wird, wobei der mindestens eine Hardware-Artikel aus der Gruppe ausgewählt ist, bestehend aus Scharnieren (51), Riegeln, Halterungen, elektrischen Leitern, Eckverbindern, Verschlusseinrichtungen und Glasklips.

5. Verfahren zum Herstellen einer Komponente eines Dachfensterrahmens oder -Flügels nach einem der vorhergehenden Ansprüche, wobei der Formhohlraum mit mindestens einem Verstärkungselement (351, 352, 353) versehen ist,
wobei das Verstärkungselement in den Thermoplast eingegossen wird, um Teil der Komponente zu werden.

6. Verfahren zum Herstellen einer Komponente eines Dachfensterrahmens oder -Flügels nach einem der vorhergehenden Ansprüche, wobei das Verfahren den Schritt des Ausbildens mindestens eines Verbindungselements in der Komponente umfasst.

7. Verfahren zum Herstellen einer Komponente eines Dachfensterrahmens oder -Flügels nach einem der vorhergehenden Ansprüche, wobei mindestens eines der Formhohlraum-Begrenzungselemente eine oder mehrere Vertiefungen oder Vorsprünge auf seiner Oberfläche aufweist, so dass ein oder mehrere Vorsprünge, Vertiefungen, Rippen, Kämme, Maschen, Finnen, Verbindungselemente, Entlüftungskanäle oder andere Oberflächenstrukturen auf der Komponente ausgebildet werden.

8. Verfahren zum Herstellen einer Komponente eines Dachfensterrahmens oder -Flügels nach einem der vorhergehenden Ansprüche, wobei ein oder mehrere Formeinsätze verwendet werden, um die Komponente mit einer Wabenstruktur oder zellularen Struktur vorzusehen, die aus mehrere Rippen und/oder Kragen ausgebildet ist.

9. Verfahren zum Herstellen einer Komponente eines Dachfensterrahmens oder -Flügels nach einem der vorhergehenden Ansprüche, wobei das Verfahren weiterhin den Schritt des mindestens teilweisen Verkapselns der Komponente mit Kunststoff umfasst, wobei der Kunststoff gegebenenfalls Polyurethan ist.

10. Verfahren zum Herstellen einer Komponente eines Dachfensterrahmens oder -Flügels nach einem der vorhergehenden Ansprüche, wobei das Füllmittel in der Gestalt von Fasern vorhanden ist, wobei die Fasern beispielsweise Glasfasern sein können oder aus Naturfasern, vorzugsweise Cellulose, angefertigt sein können.

11. Verfahren zum Herstellen einer Komponente eines Dachfensterrahmens oder -Flügels nach einem der vorhergehenden Ansprüche, wobei sich der Einlass (102) relativ zu dem Formhohlraum bewegt und die Bewegung in mehr als einer Dimension auftritt.

12. Verfahren zum Herstellen einer Komponente eines Dachfensterrahmens oder -Flügels nach einem der vorhergehenden Ansprüche, wobei ein Teil der Komponente aus der Form herausgelöst wird, während ein anderer Teil der Komponente in der Form ausgebildet wird.

## Revendications

1. Procédé pour fabriquer un composant d'un cadre de fenêtre de toit ou vantail (502), le procédé comprenant les étapes consistant à :
- fournir un thermoplastique (100) ayant une température de fusion dans la plage de 100 à 300 °C ;
- fournir un moule comprenant une cavité (104), la cavité étant définie par une pluralité d'organes de limite, le volume de la cavité étant réglable ;
- chauffer le thermoplastique à une température à laquelle il fond ;
- introduire le thermoplastique liquide dans la cavité de moule par l'intermédiaire d'une entrée (102) ;
- augmenter le volume de la cavité de moule en déplaçant au moins un des organes de limite et fournir un mouvement relatif entre l'entrée et la cavité de moule tout en introduisant davantage de thermoplastique liquide de telle sorte que le thermoplastique liquide se conforme au volume agrandi de la cavité ;
- permettre au thermoplastique de durcir de sorte qu'il puisse conserver son profil sans nécessiter de soutien du moule et libérer le thermoplastique durci du moule ; le thermoplastique contenant une charge en une quantité de 10 à 70 % en poids,
et dans lequel en outre un insert de moule est prévu dans la cavité de moule, préférablement avant que le thermoplastique liquide ne soit introduit, le thermoplastique liquide étant moulé autour de l'insert de moule, l'insert de moule étant retiré de la cavité après que le thermoplastique entourant le moule a durci de telle sorte qu'il puisse conserver son profil sans nécessiter de soutien de l'insert de moule, le retrait de l'insert formant une région creuse dans le composant du cadre de fenêtre de toit ou vantail.

2. Procédé pour fabriquer un composant d'un cadre de fenêtre de toit ou vantail selon la revendication 1, le composant étant un organe formant noyau (531, 533) adapté pour former une partie d'un organe de cadre de dessus, d'un organe de cadre de dessous, d'un organe de cadre latéral, d'un organe de vantail de dessus, d'un organe de vantail de dessous ou d'un organe de vantail latéral, ou d'une combinaison de ceux-ci.

3. Procédé pour fabriquer un composant d'un cadre de fenêtre de toit ou vantail selon la revendication 1, comprenant en outre l'étape consistant à pourvoir la région creuse d'une isolation (7) après qu'elle a été formée, l'isolation étant facultativement sélectionnée dans le groupe constitué par le polypropylène expansé, le polystyrène expansé, le polyuréthane, le polyester expansé, l'acide poly-lactique expansé, la laine minérale, les fibres naturelles, l'aérogel et des mélanges de ceux-ci.

4. Procédé pour fabriquer un composant d'un cadre de fenêtre de toit ou vantail selon n'importe quelle revendication précédente, dans lequel au moins un article de matériel est prévu dans la cavité de moule avant ou pendant l'introduction du thermoplastique liquide, l'article de matériel étant en cours de moulage dans le composant d'un cadre de fenêtre de toit ou vantail, l'au moins un article de matériel étant sélectionné dans le groupe constitué par des charnières (51), des verrous, des pattes, des conducteurs électriques, des clavettes d'angle, des raccords de fixation, et des pinces de vitrage.

5. Procédé pour fabriquer un composant d'un cadre de fenêtre de toit ou vantail selon n'importe quelle revendication précédente, dans lequel la cavité de moule est pourvue d'au moins un organe de renforcement (351, 352, 353), l'organe de renforcement étant moulé dans le thermoplastique pour devenir une partie du composant.

6. Procédé pour fabriquer un composant d'un cadre de fenêtre de toit ou vantail selon n'importe quelle revendication précédente, le procédé comprenant l'étape consistant à former au moins un élément de connexion dans le composant.

7. Procédé pour fabriquer un composant d'un cadre de fenêtre de toit ou vantail selon n'importe quelle revendication précédente, dans lequel au moins un des organes de limite de cavité de moule a un ou plusieurs creux ou saillies sur sa surface de sorte qu'une ou plusieurs saillies, dépressions, nervures, crêtes, mailles, ailettes, éléments connecteurs, conduits d'évent ou autres structures de surface soient formés sur le composant.

8. Procédé pour fabriquer un composant d'un cadre de fenêtre de toit ou vantail selon n'importe quelle revendication précédente, dans lequel un ou plusieurs inserts de moule sont utilisés pour pourvoir le composant d'une structure en nid d'abeilles ou structure cellulaire formée à partir d'une pluralité de nervures et/ou de brides.

9. Procédé pour fabriquer un composant d'un cadre de fenêtre de toit ou vantail selon n'importe quelle revendication précédente, le procédé comprenant en outre l'étape consistant à encapsuler au moins partiellement le composant avec du plastique, le plastique étant facultativement du polyuréthane.

10. Procédé pour fabriquer un composant d'un cadre de fenêtre de toit ou vantail selon n'importe quelle revendication précédente, dans lequel la charge est présente sous la forme de fibres, où lesdites fibres peuvent par exemple être des fibres de verre ou être constituées de fibres naturelles, préférablement de la cellulose.

11. Procédé pour fabriquer un composant d'un cadre de fenêtre de toit ou vantail selon n'importe quelle revendication précédente, dans lequel l'entrée (102) se déplace relativement à la cavité de moule et le déplacement se produit dans plus d'une dimension.

12. Procédé pour fabriquer un composant d'un cadre de fenêtre de toit ou vantail selon n'importe quelle revendication précédente, dans lequel une partie du composant est libérée du moule tandis qu'une autre partie du composant est formée dans le moule.
